# EUROPEAN PATENT SPECIFICATION

(11) **EP 2 702 864 B1**
(45) Date of publication and mention of the grant of the patent: **03.01.2018**
(21) Application number: 13181994.8
(22) Date of filing: 28.08.2013
(51) Int. Cl.: A01G 9/22

(54) **Greenhouse**
Gewächshaus
Serre

(30) Priority: 30.08.2012 NL 2009390
(43) Date of publication of application: 05.03.2014
(73) Proprietor: Beheer 141 B.V., 2681 TW Monster (NL)
(72) Inventor: Zwinkels, Sebastiaan Cornelis Hendricus, 2681 TW Monster (NL)
(74) Representative: Hooiveld, Arjen Jan Winfried

(56) References cited:
- EP-A1- 0 483 994
- EP-A2- 0 715 054
- CA-A1- 2 327 648
- DE-A1- 2 501 147
- FR-A1- 2 665 720
- GB-A- 2 197 007
- NL-A- 7 811 454
- NL-C2- 1 028 445
- NEEFJES H: "AFSCHERMEN VAN ASSIMILATIELICHT", VAKBLAD VOOR DE BLOEMISTERIJ, REED BUSINESS INFORMATION, DEN HAAG, NL, vol. 56, no. 13, 30 March 2001 (2001-03-30), pages 34-37, XP001048359, ISSN: 0042-2223
- GROEN J J: "Gevelschermen: plaatsing, systemen en doeken", VAKBLAD VOOR DE BLOEMISTERIJ,, vol. 42, no. 5, 30 January 1987 (1987-01-30), pages 58-59, XP001252938,

## Description

The invention relates to a (Dutch) greenhouse comprising at least one gutter section and a roof extending from said gutter section, which roof comprises a ridge section as well as spaced-apart glazing bars which are connected to an edge of the gutter section near one end and to the ridge section near the other end, whilst panes are provided between adjacent glazing bars, which panes are supported in rebates of the glazing bars, in a rebate of the gutter section and between two flanges of the ridge section, which are disposed one above the other.

It is noted that in practice the term "greenhouse" is generally used for an agricultural and/or horticultural greenhouse suitable for cultivating vegetables, fruit or flowers and the like.

Such a greenhouse is generally known and described in particular in Dutch patent publication No. 89.02603. The greenhouse discussed therein is built up of columns, gutters of tubular cross-section supported by said columns, and of a sloping roof consisting of a ridge section, glazing bars and panes, which extends between two gutters. Said gutters and said glazing bars form structural elements which are to take up the weight of the roof plus any wind and snow loads. The columns are in turn fixed to foundation elements installed in the ground.

A general drawback of a greenhouse of the type as referred to in the introduction, among which the greenhouse that is known from the aforesaid Dutch patent specification, is the following. In the Netherlands, greenhouse growers are legally obliged to take measures against the emission of light from the lighting system in the greenhouse. At the same time, however, there is the requirement that it must be possible to pass air through a (part of an) outside wall of the greenhouse in order to be able to create a desired climate in the greenhouse, in particular during lighting hours. So far an adequate solution regarding the above, apparently contradictory, requirements, viz. on the one hand blocking the outside wall so as to prevent the emission of light into the surrounding atmosphere and on the other hand opening the outside wall so as to enable the passage of air, has not been found in the greenhouse growing

Document NL-C-1028445 teaches the use of rollable screens in a greenhouse, wherein said screens are rolled out at night to limit the emission of light to the outside.

The object of the invention is to improve the prior art, i.e. to eliminate the above drawback, in particular to provide a greenhouse in which the aforesaid light emission is kept within bounds in accordance with the regulations and in which the aforesaid aeration of the greenhouse can take place as required.
In order to achieve that object, a greenhouse of the kind described in the introduction is according to the invention, as defined in claim 1, characterised in that an outside wall side of the greenhouse is at least partially provided with air permeable light-blocking means so as to block the emission of light from the greenhouse into the surrounding atmosphere, said light-blocking means comprising several louvers extending parallel to each other, which louvers are profiled, seen in cross-sectional view, with the profiles of adjacent louvers overlapping in transverse direction. The profile preferably extends in meander-like fashion. The effect of adjacent louvers overlapping in transverse direction is that light being emitted by the lighting system in the greenhouse is optically blocked by overlapping parts of said louvers and cannot exit from the greenhouse, therefore. At the same time, adjacent louvers bound respective air channels, so that air can be drawn in from outside the greenhouse or be exhausted from the interior of the greenhouse between the louvers and through the air channels. The light-blocking means is preferably configured as a separate construction element consisting of several interconnected louvers which are held spaced from each other by means of spacers. The construction element preferably extends the entire width of the greenhouse and has a height of a few metres, in particular 2 - 5 metres. The construction element is in particular mounted on the outer side of the outside wall. In another preferred variant, the construction element is mounted on the inner side.

In a preferred embodiment of a greenhouse according to the invention, the profile extends in zigzag fashion. In another preferred embodiment the profile extends in snake-like fashion. The profile is in that case in particular sine-shaped with one or two crests.

In another preferred embodiment of a greenhouse according to the invention, adjacent louvers are held a predetermined distance apart by means of a spacer.

In another preferred embodiment of a greenhouse according to the invention, the louvers are made of plastic material.

Within the framework of the invention, the light blocking means may also comprise a light-blocking screen and/or an insect screen.

The invention will now be explained in more detail with reference to figures illustrated in a drawing, in which:
- Figure 1 is a schematic, perspective view of a standard "Venlo-type" greenhouse;
- Figure 2 shows a detail of figure 1, showing a preferred variant of a light-blocking means according to the invention; and
- Figure 3 is a more detailed view of the light-blocking means of figure 1.

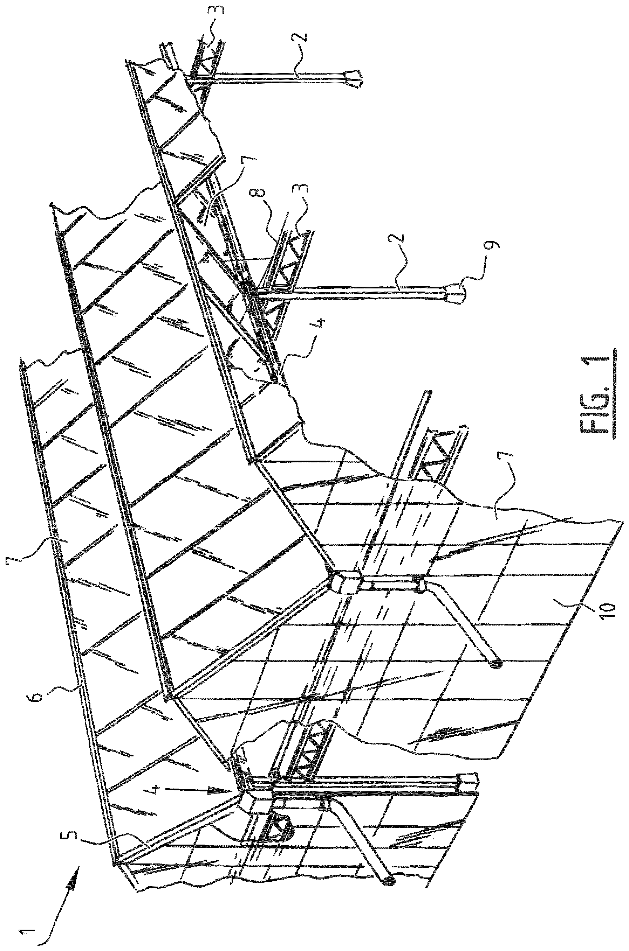

Figure 1 shows a "Venlo-type" greenhouse 1 comprising a supporting structure with vertical columns 2 and horizontal girders 3 that connect the columns 3 together. The supporting structure supports a roof structure comprising roof gutters 4 and roof trusses 5 which extend toward a ridge 6. The roof structure and the supporting structure are provided with windows 7 for admitting daylight. Various driving devices may be provided at the top of the greenhouse 1, for example a driving device 8 for opening and closing the windows 7. Furthermore, a driving device (not shown) may be provided for operating a screen (not shown) mounted at the top of the greenhouse for protecting crops being grown in the greenhouse 1 against fierce sunlight and reducing any heat losses via the roof structure as much as possible. The columns 2 are in turn connected to foundation piles 9, which foundation piles 9 partially extend above the ground.

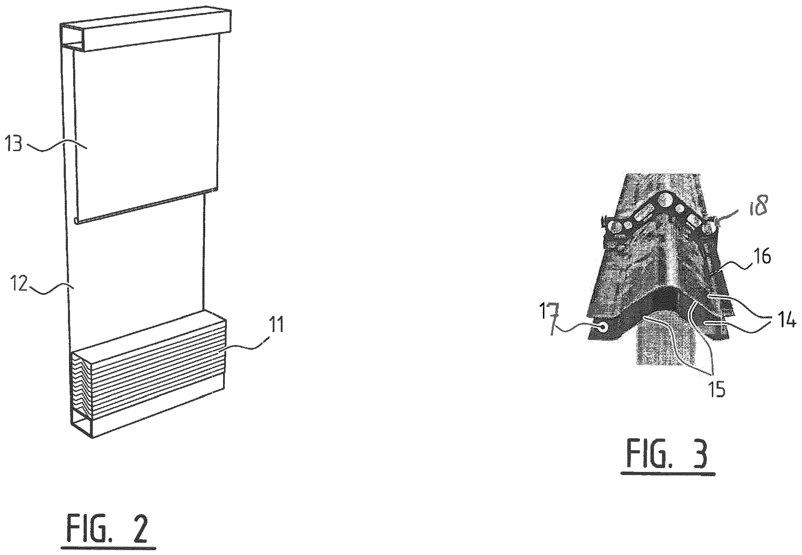

As shown in figure 2, an outside wall side 10 of the greenhouse 1 is provided with an air permeable light-blocking means 11 on the outer side, which functions to block the emission of light from the greenhouse 1 into the surrounding atmosphere. The light-blocking means 11 also comprises an insect screen 12 and a light-blocking screen 13.

With reference to figure 3, the light-blocking means 11 comprises several louvers 14 extending parallel to each other. As shown, each louver 14 has a corrugated profile 15, shown in cross-sectional view, with the profiles 15 of adjacent louvers 14 overlapping in transverse direction. The overlapping parts 16 prevent the emission of light from inside the greenhouse 1 into the surrounding atmosphere. However, the adjacent louvers define an air channel 17 for the passage of air therethrough into or out of the greenhouse 1. The louvers 14 are held spaced apart by means of spaces 18.

The invention is not limited to the embodiment shown herein, but it also extends to other preferred variants that fall within the scope of the appended claims.

## Claims

1. A greenhouse (1) comprising at least one gutter section (4) and a roof extending from said gutter section, which roof comprises a ridge section (6) as well as spaced-apart glazing bars which are connected to an edge of the gutter section (4) near one end and to the ridge section (6) near the other end, whilst panes (7) are provided between adjacent glazing bars, which panes are supported in rebates of the glazing bars, in a rebate of the gutter section (4) and between two flanges of the ridge section (6), which are disposed one above the other, **characterised in that** an outside wall side (10) of the greenhouse is at least partially provided with air permeable light-blocking means (11) so as to block the emission of light from the greenhouse (1) into the surrounding atmosphere, said light-blocking means (11) comprising several louvers (14) extending parallel to each other, wherein the louvers (14) are profiled, seen in cross-sectional view, and wherein the profiles of adjacent louvers (14) overlap in transverse direction.

2. A greenhouse (1) according to claim 1, wherein the profile (15) extends in meander-like fashion.

3. A greenhouse (1) according to claim 1 or 2, wherein the profile (15) extends in zigzag fashion.

4. A greenhouse (1) according to claim 1 or 2, wherein the profile (15) extends in snake-like fashion.

5. A greenhouse (1) according to claim 4, wherein the profile (15) extends in sinusoidal fashion.

6. A greenhouse (1) according to claim 5, wherein the profile (15) comprises one or two crests.

7. A greenhouse (1) according to any one of the preceding claims 1 - 6, wherein adjacent louvers (14) are held a predetermined distance apart by means of a spacer (17).

8. A greenhouse (1) according to any one of the preceding claims 1 - 7, wherein the louvers (14) are made of plastic material.

9. A greenhouse (1) according to any one of the preceding claims 1 - 8, wherein the light-blocking means (11) also comprises a light-blocking screen (13).

## Patentansprüche

1. Ein Gewächshaus (1) mit mindestens einem Rinnenabschnitt (4) und einem sich von dem Rinnenabschnitt erstreckenden Dach, das einen Firstabschnitt (6) sowie voneinander beabstandete Fenstersprossen umfasst, die nahe einem Ende mit einem Rand des Rinnenabschnittes (4) und nahe dem anderen Ende mit dem Firstabschnitt (6) verbunden sind, wobei zwischen benachbarten Fenstersprossen Fensterscheiben (7) vorgesehen sind, die in Falzen der Fenstersprossen, in einem Falz des Rinnenabschnittes (4) und zwischen zwei übereinander angeordneten Flanschen des Firstabschnittes (6) abgestützt sind, **dadurch gekennzeichnet dass** eine äußere Wandseite (10) des Gewächshauses zumindest teilweise mit einem luftdurchlässigen lichtblockierenden Mittel (11) versehen ist, um die Emission von Licht vom Gewächshaus (1) in die umgebende Atmosphäre zu verhindern, wobei das lichtblockierende Mittel (11) mehrere parallel zueinander verlaufende Lamellen (14) aufweist, wobei die Lamellen im Querschnitt betrachtet profiliert sind und wobei sich die Profile benachbarter Lamellen (14) in Querrichtung überlappen.

2. Gewächshaus (1) nach Anspruch 1, wobei sich das Profil (15) mäanderartig erstreckt.

3. Gewächshaus (1) nach Anspruch 1 oder 2, wobei sich das Profil (15) zickzackförmig erstreckt.

4. Gewächshaus (1) nach Anspruch 1 oder 2, wobei sich das Profil (15) schlangenförmig erstreckt.

5. Gewächshaus (1) nach Anspruch 4, wobei sich das Profil (15) sinusförmig erstreckt.

6. Gewächshaus (1) nach Anspruch 5, wobei das Profil (15) ein oder zwei Kämme aufweist.

7. Gewächshaus (1) nach einem der vorhergehenden Ansprüche 1 - 6, wobei benachbarte Lamellen (14) mittels eines Abstandshalters (17) in einem vorbestimmten Abstand voneinander beabstandet gehalten werden.

8. Gewächshaus (1) nach einem der vorhergehenden Ansprüche 1 - 7, wobei die Lamellen (14) aus Kunststoff hergestellt sind.

9. Gewächshaus (1) nach einem der vorhergehenden Ansprüche 1 - 8, wobei das lichtblockierende Mittel (11) auch einen lichtblockierenden Schirm (13) umfasst.

## Revendications

1. Serre (1) comportant au moins une section de gouttière (4) et un toit s'étendant à partir de ladite section de gouttière, lequel toit comprend une section de faîtage (6) ainsi que des barres de vitrage espacées qui sont reliées à un bord de la section de gouttière (4) à proximité d'une première extrémité et à la section faîtage (6) à proximité de l'autre extrémité, tandis que des vitres (7) sont agencées entre les barres de vitrage adjacentes, lesquelles vitres sont supportées dans des feuillures des barres de vitrage, dans une feuillure de la section de gouttière (4) et entre deux brides de la section de faîtage (6), lesquelles sont disposées l'une au-dessus de l'autre, **caractérisée en ce qu'**un côté de paroi externe (10) de la serre est équipé au moins partiellement d'un moyen d'occultation de lumière (11) perméable à l'air de manière à bloquer l'émission de lumière depuis la serre (1) dans l'atmosphère environnante, ledit moyen d'occultation de lumière (11) comprenant plusieurs volets (14) s'étendant parallèlement les uns aux autres, dans laquelle les volets (14) sont profilés, suivant une vue en coupe transversale, et dans laquelle les profils des volets adjacents (14) se recouvrent dans la direction transversale.

2. Serre (1) selon la revendication 1, dans laquelle le profil (15) s'étend en forme de méandres.

3. Serre (1) selon la revendication 1 ou 2, dans laquelle le profil (15) s'étend en forme de zigzags.

4. Serre (1) selon la revendication 1 ou 2, dans laquelle le profil (15) s'étend en forme de serpent.

5. Serre (1) selon la revendication 4, dans laquelle le profil (15) s'étend en forme sinusoïdale.

6. Serre (1) selon la revendication 5, dans laquelle le profil (15) comprend une ou deux crêtes.

7. Serre (1) selon l'une quelconque des revendications 1 à 6 précédentes, dans laquelle des volets adjacents (14) sont maintenus séparés à une distance prédéterminée au moyen d'une entretoise (17).

8. Serre (1) selon l'une quelconque des revendications 1 à 7 précédentes, dans laquelle les volets (14) sont réalisés en une matière plastique.

9. Serre (1) selon l'une quelconque des revendications 1 à 8 précédentes, dans laquelle le moyen d'occultation de lumière (11) comprend aussi un écran d'occultation de lumière (13).
